# EUROPÄISCHE PATENTANMELDUNG

(11) **EP 3 242 047 A1**
(43) Veröffentlichungstag der Anmeldung: **08.11.2017**
(21) Anmeldenummer: 17167910.3
(22) Anmeldetag: 25.04.2017
(51) Int. Cl.: F16C 33/08, F16C 17/02, F16C 43/02

(54) **LAGERANORDNUNG UND VERFAHREN ZUM POSITIONIEREN EINER LAGERHÜLSE IN EINEM AUFNAHMEGEHÄUSE**

(30) Priorität: 04.05.2016 DE 102016207686
(71) Anmelder: Robert Bosch GmbH, 70442 Stuttgart (DE)
(72) Erfinder: Vogt, Andreas, 71272 Renningen (DE); Mayer, Michael, 70565 Stuttgart (DE)

(57) **Zusammenfassung**

Die Erfindung betrifft eine Lageranordnung (1), wobei das Aufnahmegehäuse (10) zumindest eine Öffnung (18) aufweist, welche sich von einer Außenoberfläche (10a) des Aufnahmegehäuses (10) zur Bohrung (12) erstreckt, wobei in einem zwischen einem bohrungsseitigen Ende der Öffnung (18) und einer Außenoberfläche der Lagerhülse (14) ausgebildeten Zwischenraum des Aufnahmegehäuses (10) ein Klebstoff angeordnet ist, welcher die Lagerhülse (14) am Aufnahmegehäuse (10) befestigt. Die Erfindung betrifft des Weiteren ein Verfahren zum Positionieren einer Lagerhülse (14) in einem Aufnahmegehäuse (10).

## Beschreibung

Die Erfindung betrifft eine Lageranordnung. Die Erfindung betrifft des Weiteren ein Verfahren zum Positionieren einer Lagerhülse in einem Aufnahmegehäuse.

### Stand der Technik

In vielen Anwendungen ist die genaue Positionierung von Bauteilen zueinander wichtig für die Funktionalität einer Komponente. Enge Toleranzen stellen allerdings z.B. unter Kostenaspekten eine Herausforderung für die Fertigung oder auch die Montage der Bauteile dar.

So muss z.B. die Wellen- bzw. Lagerposition in thermischen Strömungsmaschinen besonders in radialer Richtung sehr genau festgelegt sein. Die direkt auf den Wellen befestigten Verdichterräder dürfen nur minimale Abstände zur Volute aufweisen, damit der Wirkungsgrad der Strömungsmaschine gut ist. Bei zu kleinen Abständen kann es aber zum Anstreifen der Räder am Gehäuse mit anschließendem Ausfall der Maschinen kommen. Typische Abstände zwischen Verdichterrad und Volute bei kleinen Strömungsmaschinen sind z.B. 50 µm.

Die Genauigkeit der Position der Welle und somit des Verdichterrads ist auch durch das Lagerspiel bestimmt. In Gleitlagern muss zwischen Welle und Lager ein Spalt für den die Welle tragenden Schmierfilm vorgehalten werden. Insbesondere bei aerodynamischen Lagern ist dieser Spalt zwar klein und bewegt sich in einer Größenordnung von 10 µm, aber die dadurch entstehende Ungenauigkeit der radialen Wellenposition liegt in der gleichen Größenordnung wie der Spalt zwischen Verdichterrad und Gehäuse bzw. Volute. Die Konsequenz hieraus ist, dass die Bauteil- und die Montagetoleranzen minimiert werden müssen. Die Fertigung von Bauteilen mit minimalen Toleranzen ist jedoch kostenaufwendig.

Die DE 10 2012 211 882 A1 offenbart eine herkömmliche Strömungsmaschine mit einem gasgelagerten Rotor, umfassend eine rotierende Einheit mit einem Verdichterrad, einem Turbinenrad und einem Lagerkamm sowie ein feststehendes Lagergehäuse mit mindestens einem Lagerring, wobei die rotierende Einheit der Strömungsmaschine eine Axiallager-Lauffläche und eine Radiallager-Lauffläche umfasst und wobei der Lagerkamm einen Kontaktbereich umfasst, in welchem der Lagerkamm zwischen dem Verdichterrad und dem Turbinenrad befestigt ist.

### Offenbarung der Erfindung

Die vorliegende Erfindung schafft eine Lageranordnung mit einem Aufnahmegehäuse, in das eine Bohrung eingebracht ist; und einer Lagerhülse zum Lagern eines rotierenden Bauteils, welche in die Bohrung des Aufnahmegehäuses eingefügt ist, dadurch gekennzeichnet, dass das Aufnahmegehäuse zumindest eine Öffnung aufweist, welche sich von einer Außenoberfläche des Aufnahmegehäuses zur Bohrung erstreckt, wobei in einem zwischen einem bohrungsseitigen Ende der Öffnung und einer Außenoberfläche der Lagerhülse ausgebildeten Zwischenraum des Aufnahmegehäuses ein Klebstoff angeordnet ist, welcher die Lagerhülse am Aufnahmegehäuse befestigt.

Die vorliegende Erfindung schafft des Weiteren ein Verfahren zum Positionieren einer Lagerhülse in einem Aufnahmegehäuse. Das Verfahren umfasst ein Bereitstellen eines Aufnahmegehäuses, in das eine Bohrung eingebracht ist. Das Verfahren umfasst des Weiteren ein Einfügen einer Lagerhülse zum Lagern eines rotierenden Bauteils in die Bohrung des Aufnahmegehäuses. Das Verfahren umfasst überdies ein Einfügen eines Klebstoffs durch zumindest eine, in das Aufnahmegehäuse eingebrachte Öffnung, welche sich von einer Außenoberfläche des Aufnahmegehäuses zur Bohrung des Aufnahmegehäuses erstreckt, in einen zwischen einem bohrungsseitigen Ende der Öffnung und einer Außenoberfläche der Lagerhülse ausgebildeten Zwischenraum des Aufnahmegehäuses zum Befestigen der Lagerhülse am Aufnahmegehäuse.

Eine Idee der vorliegenden Erfindung ist es, kostenintensive Fertigungstoleranzen von Bauteilen aufzuweiten und die notwendige Positioniergenauigkeit des Lagers erst im Montageprozess zu erreichen. Insbesondere zeichnet sich die vorliegende Erfindung dadurch aus, dass Lager unabhängig von Fertigungstoleranzen im Gehäuse exakt positioniert werden können. Der Vorteil der Erfindung liegt somit darin, dass Fertigungstoleranzen durch Einstellen der radialen Lagerposition noch während der Montage im Gehäuse kompensiert werden können, sodass mit dem Lager auch die Welle bzw. das Bauteil in radialer Richtung exakt positioniert werden können.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass das Aufnahmegehäuse eine zu einer Mittellängsachse des Aufnahmegehäuses ausgerichtete Zentrieröffnung, insbesondere eine Verjüngung, aufweist, in welche ein Zentrierwerkzeug zum Positionieren der Lagerhülse zum Aufnahmegehäuse einfügbar ist. Somit ist die Lagerhülse vorzugsweise an dem Zentrierwerkzeug exakt zum Aufnahmegehäuse positionierbar. Diese Zentrieröffnung bzw. Verjüngung ist die Volute.

Gemäß einer weiteren bevorzugten Weiterbildung ist vorgesehen, dass die Lagerhülse durch das Zentrierwerkzeug in der Bohrung des Aufnahmegehäuses positionierbar ist, wobei eine Lagetoleranz des Zentrierwerkzeugs geringer als 5 µm beträgt, und wobei das Zentrierwerkzeug einen axialen Endanschlag zur axialen Positionierung der Lagerhülse zum Aufnahmegehäuse aufweist. Durch Vorsehen des axialen Endanschlags am Zentrierwerkzeug ist somit ebenfalls eine exakte axiale Positionierung der Lagerhülse relativ zum Aufnahmegehäuse möglich.

Gemäß einer weiteren bevorzugten Weiterbildung ist vorgesehen, dass die zumindest eine Öffnung als Schlitz ausgebildet ist, welcher zumindest abschnittsweise entlang eines Umfangs des Aufnahmegehäuses angeordnet ist, wobei die zumindest eine Öffnung zu der Bohrung im Wesentlichen senkrecht angeordnet ist. Durch eine Ausführung der Öffnung zumindest abschnittsweise als Schlitz kann der Klebstoff entlang eines gegenüber einer herkömmlichen Bohrung längeren Bereiches in das Aufnahmegehäuse eingefügt werden. Damit kann eine festere Verbindung zwischen Lagerhülse und Aufnahmegehäuse hergestellt werden. Durch die im Wesentlichen senkrechte Anordnung der Öffnung zur Bohrung ist ein einfaches und sicheres Einfügen des Klebstoffs in das Aufnahmegehäuse möglich.

Gemäß einer weiteren bevorzugten Weiterbildung ist vorgesehen, dass der Klebstoff zumindest abschnittsweise in der zumindest einen Öffnung angeordnet ist. Somit kann der Klebstoff etwaige Form- und/oder Lagetoleranzen der Lagerhülse bzw. der in das Aufnahmegehäuse eingebrachten Bohrung kompensieren.

Gemäß einer weiteren bevorzugten Weiterbildung ist vorgesehen, dass ein erster Durchmesser der in das Aufnahmegehäuse eingefügten Bohrung 0,1 mm bis 2 mm, vorzugsweise 0,5 mm bis 1,5 mm, größer als ein zweiter Durchmesser der Lagerhülse ist. Die Gehäusebohrung kann somit deutlich größer als die Lagerhülse ausgebildet werden. Durch die aufgeweiteten Toleranzen von Lagerhülse und Gehäusebohrung können somit in vorteilhafter Weise Herstellungskosten gesenkt werden.

Gemäß einer weiteren bevorzugten Weiterbildung ist vorgesehen, dass die Lagerhülse als Luftlager ausgebildet ist, wobei bei einem Betrieb der Lageranordnung zwischen dem rotierenden Bauteil und der Lagerhülse ein Gasfilm ausgebildet ist, welcher dazu ausgebildet ist, eine durch eine Schwingung des durch die Lagerhülse gelagerten, rotierenden Bauteils bedingte, im Wesentlichen senkrecht zur Lagerhülse gerichtete Kraft auf die Lagerhülse zu übertragen. Der Gasfilm bewirkt somit in vorteilhafter Weise, dass das Bauteil während des Betriebs der Lageranordnung keinen Kontakt mit der Lagerhülse bildet.

Gemäß einer weiteren bevorzugten Weiterbildung ist vorgesehen, dass der die Lagerhülse am Aufnahmegehäuse befestigende Klebstoff im ausgehärteten Zustand dazu ausgebildet ist, die durch die Schwingung des rotierenden Bauteils auf die Lagerhülse wirkende Kraft zu dämpfen.

Gemäß einer weiteren bevorzugten Weiterbildung ist vorgesehen, dass eine Steifigkeit und Dämpfung der Lageranordnung durch Auswahl des Klebstoffs einstellbar sind. Für eine Anpassung von Steifigkeit und Dämpfung an individuelle Anforderungen der Anwendung müssen also vorzugsweise nicht Lager oder Gehäuse aufwendig verändert werden, sondern es reicht, den Klebstoff zu wechseln oder die Klebstoffmenge zu variieren.

Gemäß einer weiteren bevorzugten Weiterbildung ist vorgesehen, dass die Lageranordnung durch ein Radiallager oder ein Axiallager ausgebildet ist. Die erfindungsgemäßen vorteilhaften Aspekte der Wirkung des Klebstoffs als Feder-Dämpfersystem finden somit in vorteilhafter Weise Anwendung bei Radiallagern als auch Axiallagern.

Gemäß einer weiteren bevorzugten Weiterbildung ist vorgesehen, dass ein Zentrierwerkzeug in eine in dem Aufnahmegehäuse, zu einer Mittellängsachse des Aufnahmegehäuses ausgerichteten Zentrieröffnung, insbesondere Verjüngung, eingefügt wird, wobei die Lagerhülse im eingefügten Zustand des Zentrierwerkzeugs zum Positionieren der Lagerhülse zum Aufnahmegehäuse auf das Zentrierwerkzeug aufgeschoben wird. Somit ist eine exakte axiale Positionierung der Lagerhülse relativ zum Aufnahmegehäuse möglich.

Gemäß einer weiteren bevorzugten Weiterbildung ist vorgesehen, dass das Zentrierwerkzeug während eines Aushärtens des Klebstoffs montiert bleibt, um die Lagerhülse zum Aufnahmegehäuse positionsfest anzuordnen. Damit kann in vorteilhafter Weise eine exakte Positionierung der Lagerhülse zum Aufnahmegehäuse erreicht werden.

Gemäß einer weiteren bevorzugten Weiterbildung ist vorgesehen, dass der im nicht ausgehärteten Zustand fließfähige Klebstoff eine Ungenauigkeit einer äußeren Form- und Lagetoleranz der Lagerhülse kompensiert. Die Lagetoleranz zwischen Lagerhülse und Gehäuse wird bei der Montage mit dem Zentrierwerkzeug somit in vorteilhafter Weise sichergestellt und muss nicht durch die Genauigkeit der Bauteile realisiert werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine Querschnittsdarstellung einer Lageranordnung gemäß einer bevorzugten Ausführungsform der Erfindung; und
- Fig. 2: ein Ablaufdiagramm eines Verfahrens zum Positionieren einer Lagerhülse in einem Aufnahmegehäuse gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

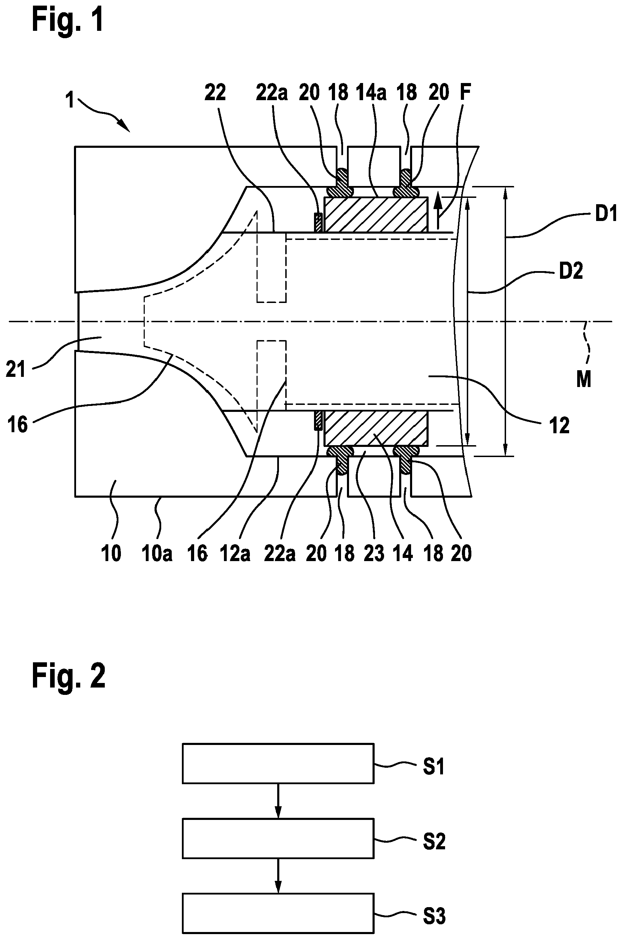

Fig. 1 zeigt eine Querschnittsdarstellung einer Lageranordnung gemäß einer bevorzugten Ausführungsform der Erfindung.

Die Lageranordnung 1 weist ein Aufnahmegehäuse 10 auf, in das eine Bohrung 12 eingebracht ist. Die Lageranordnung 1 weist des Weiteren eine Lagerhülse 14 zum Lagern eines rotierenden Bauteils 16 auf. Die Lagerhülse 14 ist in die Bohrung 12 des Aufnahmegehäuses 10 eingefügt. Das Aufnahmegehäuse 10 weist des Weiteren eine Anzahl von zwei Öffnungen 18 auf, welche sich von einer Außenoberfläche 10a des Aufnahmegehäuses 10 zur Bohrung 12 erstrecken. Alternativ kann auch eine beliebige andere Anzahl zweiter Bohrungen vorgesehen sein, welche sich von der Außenoberfläche 10a des Aufnahmegehäuses 10 zur Bohrung 12 erstrecken. Durch die zwei Öffnungen ist ein Klebstoff 20 in das Aufnahmegehäuse 10 eingefügt. Der Klebstoff 20 befestigt die Lagerhülse 14 am Aufnahmegehäuse 10.

Die zwei Öffnungen 18 sind vorzugsweise als Schlitz ausgebildet, welcher zumindest abschnittsweise entlang eines Umfangs des Aufnahmegehäuses 10 angeordnet sind. Alternativ ist beispielsweise eine andere Form wie eine herkömmliche Rundbohrung zur Ausbildung der zwei Öffnungen möglich.

Die zwei Öffnungen sind vorzugsweise im Wesentlichen senkrecht zu der Bohrung 12 angeordnet. Alternativ ist beispielsweise eine andere geeignete Anordnung der zwei Öffnungen möglich.

Das Aufnahmegehäuse 10 weist vorzugsweise eine zur Mittellängsachse M des Aufnahmegehäuses 10 ausgerichtete Zentrieröffnung 21 auf. Die Zentrieröffnung 21 ist vorzugsweise als Verjüngung ausgebildet. Alternativ kann die Zentrieröffnung 21 beispielsweise eine andere geeignete geometrische Form aufweisen. In die Zentrieröffnung 21 ist vorzugsweise das Zentrierwerkzeug 22 zum Positionieren der Lagerhülse 14 zum Aufnahmegehäuse 10 einfügbar.

Die Lagerhülse 14 ist in vorteilhafter Weise durch das Zentrierwerkzeug 22 in der Bohrung 12 des Aufnahmegehäuses 10 positionierbar. Eine Lagetoleranz des Zentrierwerkzeugs 22 ist vorzugsweise geringer als 5 µm. Das Zentrierwerkzeug 22 weist vorzugsweise einen axialen Endanschlag zur axialen Positionierung der Lagerhülse 14 zum Aufnahmegehäuse 10 auf.

Der Klebstoff 20 füllt vorzugsweise einen zwischen einem Umfang 12a der in das Aufnahmegehäuse 10 eingefügten Bohrung 12 und einem Außenumfang 14a der Lagerhülse 14 ausgebildeten Spalt 23. Der Spalt 23 wird durch den Klebstoff 20 vorzugsweise abschnittsweise gefüllt.

Ein erster Durchmesser D1 der in das Aufnahmegehäuse 10 eingefügten Bohrung 12 ist vorzugsweise 0,1 mm bis 2 mm, insbesondere vorzugsweise 0,5 mm bis 1,5 mm größer als ein zweiter Durchmesser D2 der Lagerhülse 14. Die Lagerhülse 14 ist vorzugsweise als Luftlager ausgebildet, wobei bei einem Betrieb der Lageranordnung 1 zwischen dem rotierenden Bauteil 16 und der Lagerhülse 14 ein Gasfilm ausgebildet ist. Der Gasfilm bewirkt in vorteilhafter Weise, dass eine durch eine Schwingung des durch die Lagerhülse 14 gelagerten, rotierenden Bauteils 16 bedingte, im Wesentlichen senkrecht zur Lagerhülse 14 gerichtete Kraft F auf die Lagerhülse übertragbar ist.

Der die Lagerhülse 14 am Aufnahmegehäuse 10 befestigende Klebstoff 20 ermöglicht somit in vorteilhafter Weise im ausgehärteten Zustand, dass die durch die Schwingung des rotierenden Bauteils 16 auf die Lagerhülse 14 wirkende Kraft F dämpfbar ist. Ferner ist eine Steifigkeit und Dämpfung der Lageranordnung 1 vorzugsweise durch Auswahl des Klebstoffs 20 einstellbar. Die Lageranordnung 1 ist vorzugsweise durch ein Radiallager ausgebildet. Alternativ kann die Lageranordnung 1 beispielsweise durch ein Axiallager oder jegliche andere Art von Lager ausgebildet sein. Ferner alternativ ist das Prinzip für die folgende Erfindung überall dort einsetzbar, wo einzelne Bauteile sehr genau zueinander positioniert werden müssen und z.B. Fertigungstoleranzen bzw. die Kosten für enge Toleranzen diese genaue Positionierung nicht ermöglichen.

Fig. 2 zeigt ein Ablaufdiagramm eines Verfahrens zum Positionieren einer Lagerhülse in einem Aufnahmegehäuse gemäß der bevorzugten Ausführungsform der Erfindung.

Das Verfahren zum Positionieren einer Lagerhülse in einem Aufnahmegehäuse umfasst ein Bereitstellen eines Aufnahmegehäuses, in das eine Bohrung eingebracht ist. Das Verfahren umfasst überdies ein Einfügen einer Lagerhülse zum Lagern eines rotierenden Bauteils in die Bohrung des Aufnahmegehäuses. Das Verfahren umfasst überdies ein Einfügen eines Klebstoffs durch zumindest eine, in das Aufnahmegehäuse eingebrachte Öffnung, welche sich von einer Außenoberfläche des Aufnahmegehäuses zur Bohrung des Aufnahmegehäuses erstreckt, in einen zwischen einem bohrungsseitigen Ende der Öffnung und einer Außenoberfläche der Lagerhülse ausgebildeten Zwischenraum des Aufnahmegehäuses zum Befestigen der Lagerhülse am Aufnahmegehäuse.

Des Weiteren wird ein Zentrierwerkzeug in eine in dem Aufnahmegehäuse, zu einer Mittellängsachse des Aufnahmegehäuses ausgerichteten Zentrieröffnung, insbesondere Verjüngung, eingefügt, wobei die Lagerhülse im eingefügten Zustand des Zentrierwerkzeugs zum Positionieren der Lagerhülse zum Aufnahmegehäuse auf das Zentrierwerkzeug aufgeschoben wird. Das Zentrierwerkzeug bleibt während eines Aushärtens des Klebstoffs vorzugsweise montiert, um die Lagerhülse zum Aufnahmegehäuse positionsfest anzuordnen. Der im nicht ausgehärteten Zustand fließfähige Klebstoff kompensiert vorzugsweise eine Ungenauigkeit einer äußeren Form- und Lagetoleranz der Lagerhülse.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise ist eine Geometrie des Aufnahmegehäuses, der Lagerhülse und/oder des Zentrierwerkzeugs an entsprechende bauliche Anforderungen der Lageranordnung anpassbar.

## Patentansprüche

1. Lageranordnung (1), mit:
einem Aufnahmegehäuse (10), in das eine Bohrung (12) eingebracht ist; und einer Lagerhülse (14) zum Lagern eines rotierenden Bauteils (16), welche in die Bohrung (12) des Aufnahmegehäuses (10) eingefügt ist, **dadurch gekennzeichnet, dass** das Aufnahmegehäuse (10) zumindest eine Öffnung (18) aufweist, welche sich von einer Außenoberfläche (10a) des Aufnahmegehäuses (10) zur Bohrung (12) erstreckt, wobei in einem zwischen einem bohrungsseitigen Ende der Öffnung (18) und einer Außenoberfläche der Lagerhülse (14) ausgebildeten Zwischenraum des Aufnahmegehäuses (10) ein Klebstoff angeordnet ist, welcher die Lagerhülse (14) am Aufnahmegehäuse (10) befestigt.

2. Lageranordnung nach Anspruch 1, **dadurch gekennzeichnet, dass** das Aufnahmegehäuse (10) eine zu einer Mittellängsachse (M) des Aufnahmegehäuses (10) ausgerichtete Zentrieröffnung (21), insbesondere eine Verjüngung aufweist, in welche ein Zentrierwerkzeug (22) zum Positionieren der Lagerhülse (14) zum Aufnahmegehäuse (10) einfügbar ist.

3. Lageranordnung nach Anspruch 2, **dadurch gekennzeichnet, dass** die Lagerhülse (14) durch das Zentrierwerkzeug (22) in der Bohrung (12) des Aufnahmegehäuses (10) positionierbar ist, wobei eine Lagetoleranz des Zentrierwerkzeugs (22) geringer als 5 µm beträgt, und wobei das Zentrierwerkzeug (22) einen axialen Endanschlag (22a) zur axialen Positionierung der Lagerhülse (14) zum Aufnahmegehäuse (10) aufweist.

4. Lageranordnung nach einem der vorhergehenden Ansprüche, **dadurch gekennzeichnet, dass** die zumindest eine Öffnung (18) als Schlitz ausgebildet ist, welcher zumindest abschnittsweise entlang einem Umfang des Aufnahmegehäuses (10) angeordnet ist, wobei die zumindest eine Öffnung (18) zu der Bohrung (12) im Wesentlichen senkrecht angeordnet ist.

5. Lageranordnung nach einem der vorhergehenden Ansprüche, **dadurch gekennzeichnet, dass** der Klebstoff (20) zumindest abschnittsweise in der zumindest einen Öffnung (18) angeordnet ist.

6. Lageranordnung nach einem der vorhergehenden Ansprüche, **dadurch gekennzeichnet, dass** ein erster Durchmesser (D1) der in das Aufnahmegehäuse (10) eingefügten Bohrung (12) 0,1mm bis 2mm, vorzugsweise 0,5mm bis 1,5mm größer als ein zweiter Durchmesser (D2) der Lagerhülse (14) ist.

7. Lageranordnung nach einem der vorhergehenden Ansprüche, **dadurch gekennzeichnet**, das die Lagerhülse (14) als Luftlager ausgebildet ist, wobei bei einem Betrieb der Lageranordnung (1) zwischen dem rotierenden Bauteil (16) und der Lagerhülse (14) ein Gasfilm ausgebildet ist, welcher dazu ausgebildet ist, eine durch eine Schwingung des durch die Lagerhülse (14) gelagterten, rotierenden Bauteils (16) bedingte, im Wesentlichen senkrecht zur Lagerhülse (14) gerichtete Kraft (F) auf die Lagerhülse (14) zu übertragen.

8. Lageranordnung nach Anspruch 7, **dadurch gekennzeichnet**, das der die Lagerhülse (14) am Aufnahmegehäuse (10) befestigende Klebstoff (20) im ausgehärteten Zustand dazu ausgebildet ist, die durch die Schwingung des rotierenden Bauteils (16) auf die Lagerhülse (14) wirkende Kraft (F) zu dämpfen.

9. Lageranordnung nach einem der vorhergehenden Ansprüche, **dadurch gekennzeichnet**, das eine Steifigkeit und Dämpfung der Lageranordnung (1) durch Auswahl des Klebstoffs (20) einstellbar sind.

10. Lageranordnung nach einem der vorhergehenden Ansprüche, **dadurch gekennzeichnet**, das die Lageranordnung (1) durch ein Radiallager oder ein Axiallager ausgebildet ist.

11. Verfahren zum Positionieren einer Lagerhülse (14) in einem Aufnahmegehäuse (10), mit den Schritten:
Bereitstellen (S1) eines Aufnahmegehäuses (10), in das eine Bohrung (12) eingebracht ist; und
Einfügen (S2) einer Lagerhülse (14) zum Lagern eines rotierenden Bauteils (16) in die Bohrung (12) des Aufnahmegehäuses (10),
**gekennzeichnet durch**
Einfügen (S3) eines Klebstoffs (20) durch zumindest eine, in das Aufnahmegehäuse (10) eingebrachte Öffnung (18), welche sich von einer Außenoberfläche (10a) des Aufnahmegehäuses (10) zur Bohrung (12) des Aufnahmegehäuses (10) erstreckt, in einen zwischen einem bohrungsseitigen Ende der Öffnung (18) und einer Außenoberfläche der Lagerhülse (14) ausgebildeten Zwischenraum des Aufnahmegehäuses (10) zum Befestigen der Lagerhülse (14) am Aufnahmegehäuse (10).

12. Verfahren nach Anspruch 11, **dadurch gekennzeichnet**, das ein Zentrierwerkzeug (22) in eine in dem Aufnahmegehäuse (10), zu einer Mittellängsachse (M) des Aufnahmegehäuses (10) ausgerichteten Zentrieröffnung (21), insbesondere Verjüngung, eingefügt wird, wobei die Lagerhülse (14) im eingefügten Zustand des Zentrierwerkzeugs (22) zum Positionieren der Lagerhülse (14) zum Aufnahmegehäuse (10) auf das Zentrierwerkzeug (22) aufgeschoben wird.

13. Verfahren nach Anspruch 11 oder 12, **dadurch gekennzeichnet, dass** das Zentrierwerkzeug (22) während einem Aushärten des Klebstoffs (20) montiert bleibt, um die Lagerhülse (14) zum Aufnahmegehäuse (10) positionsfest anzuordnen.

14. Verfahren nach einem der Ansprüche 11 bis 13, **dadurch gekennzeichnet, dass** der im nicht ausgehärteten Zustand fließfähige Klebstoff (20) eine Ungenauigkeit einer äußeren Form- und Lagetoleranz der Lagerhülse (14) kompensiert.
